# EUROPÄISCHE PATENTANMELDUNG

(11) **EP 3 715 516 A1**
(43) Veröffentlichungstag der Anmeldung: **30.09.2020**
(21) Anmeldenummer: 20161238.9
(22) Anmeldetag: 05.03.2020
(51) Int. Cl.: D04H 1/4358, A41D 27/02, A41D 27/06, D04H 1/54, D04H 1/56, D04H 1/587, D04H 1/62, D04H 11/00, D06M 17/10

(54) **THERMISCH FIXIERBARES TEXTILES FLÄCHENGEBILDE**

(30) Priorität: 19.03.2019 DE 102019106995
(71) Anmelder: Carl Freudenberg KG, 69469 Weinheim (DE)
(72) Erfinder: Vo Quang, Jutta, 69115 Heidelberg (DE); Dobrev, Nikolay Dobrinov, 68199 Mannheim (DE); TRASER, Steffen, Dr., 64291 Darmstadt (DE)

(57) **Zusammenfassung**

Die Erfindung betrifft ein thermisch fixierbares textiles Flächengebilde (1), insbesondere verwendbar als fixierbarer Einlage-, Futter- und/oder Oberststoff in der Textilindustrie, umfassend ein Trägermaterial (2) auf Basis eines Schmelzblasfaser-Vliesstoffs, wobei das Trägermaterial (2) auf einer Seite Flockfasern (3) und auf der von den Flockfasern (3) abgewandten Seite einen Schmelzklebstoff (4) (4) aufweist.

## Beschreibung

Die Erfindung betrifft ein thermisch fixierbares textiles Flächengebilde, insbesondere verwendbar als fixierbarer Einlage-, Futter- und/oder Oberststoff in der Textilindustrie. Das textile Flächengebilde zeichnet sich durch eine sehr angenehme Haptik aus und kann gleichzeitig mit geringer Dicke und hoher Elastizität gefertigt werden. Die Erfindung betrifft ferner die Herstellung des textilen Flächengebildes und seine Verwendung als Einlage-, Futter- und/oder Oberstoff für Textilien.

Einlagestoffe sind das unsichtbare Gerüst der Bekleidung. Sie sorgen für korrekte Passformen und optimalen Tragekomfort. Je nach Anwendung unterstützen sie die Verarbeitbarkeit, erhöhen die Funktionalität und stabilisieren die Bekleidung. Neben der Bekleidung können diese Funktionen in technischen Textilanwendungen, wie z.B. der Möbel-, Polster- sowie Heimtextilien-Industrie Anwendung übernehmen.

Futterstoffe sind Stoffe, die als Futter für Textilien, beispielsweise Kleidungsstücke oder Lederwaren verwendet werden. Als Futter bezeichnet man in der Textiltechnik ein textiles Flächengebilde, das durch Nähen, Steppen und/oder thermische Fixierung an den Innenseiten von Textilien befestigt wird. Ein Futter stellt somit die innere, dem Körper zugewandte, Stoffschicht der Oberbekleidung dar. Futter kann die Funktion haben die innere Seite eines Kleidungsstückes dauerhafter, bequemer und/oder wärmer oder auch zierlicher zu machen. Zudem hat Kleidungsfutter in vielen Fällen auch einen modischen Aspekt. Außer in Kleidungsstücken wird textiles Futter auch in Hüten, Koffern, Handtaschen und anderen Behältern verwendet. Oberstoffe sind Stoffe, die als von außen sichtbare äußere Stoffschicht von Textilien verwendet werden.

Vorteilhafte Eigenschaftsprofile für Einlage-, Futter- und/oder Oberststoffe sind, je nach Anwendung, Weichheit, Sprungelastizität, Griff, Wasch- und Pflegebeständigkeit und/oder ausreichende Abriebbeständigkeit im Gebrauch. Die vorgenannten Stoffe bestehen in der Regel aus Vliesstoffen, Geweben, Gewirken oder vergleichbaren textilen Flächengebilden. Insbesondere Einlagestoffe werden meist mit einer Haftmasse versehen, wodurch die Einlage mit einem Oberstoff meist thermisch durch Hitze und/oder Druck verklebt werden kann (Fixiereinlage). Die Einlage wird somit auf einen Oberstoff laminiert. Die genannten verschiedenen textilen Flächengebilde haben je nach Herstellungsverfahren unterschiedliche Eigenschaftsprofile. Gewebe bestehen aus Fäden/Garnen in Kette- und Schussrichtung, Gewirke bestehen aus Fäden/Garnen, die über eine Maschenbindung zu einem textilen Flächengebilde verbunden werden. Vliesstoffe bestehen aus zu einem Faserflor abgelegten Einzelfasern, die mechanisch, chemisch oder thermisch gebunden werden.

Zurzeit stellen dünne, transparente, flexible oder offene Oberstoffe vor allem in der Damenoberbekleidung und Sportswear einen Trend in der Bekleidungsindustrie dar. Zur Unterstützung solcher Oberstoffe bieten sich Stoffe an, die sehr leicht und offen in ihrer Struktur sind.

Werden elastische Oberstoffe eingesetzt oder sollen Kleidungsstücke mit elastischen Eigenschaften ausgestattet werden, so ist die Verwendung elastischer textiler Flächengebilde von Vorteil.

US 8323764 B2 beschreibt ein dehnbares Werkstück, umfassend: (a) eine poröse oder mikroporöse gewebte Schicht aus teilweise verbundenen Tröpfchen eines elastischen elastomeren Materials, wobei die Schicht eine innere und äußere Oberfläche aufweist; und (b) lose Fasern, die teilweise in eine Oberfläche der Schicht eingebettet sind. Die Herstellung erfolgt durch die Verwendung einer Form (ein spezielles Werkzeug oder eine andere Vorrichtung zum Formen von Gegenständen oder Formmaterial).

Das beschriebenen Werkstück ist ein auf beiden Seiten beflocktes elastisches Material, das in flacher oder 3D-Form vorliegt und dessen Struktur durch die verwendete Form definiert ist. Zu seiner Herstellung ist ein komplexer Prozess und aufwändige Ausrüstung notwendig, d.h. es muss eine bestimmte Form eingesetzt werden sowie eine spezielle Schicht, auf der die Flockfasern vorübergehend fixiert sind, bis das Elastomer aufgebracht wird. Darüber hinaus ist die Verwendung der Form notwendig, um die elastisch beflockte Oberfläche bzw. Beschichtung herzustellen. Die Atmungsaktivität wird bei diesem Produkt durch Sprühen von Elastomertröpfchen erreicht, wobei die Zwischenräume zwischen diesen Tröpfchen als Poren dienen und für Atmungsaktivität sorgen. Dies bedeutet, dass nur ein Teil der Flockfasern, die an der Gel/Wasserlösung fixiert sind, im Endprodukt verbleibt, was zu einer höheren Abfallquote führt. Darüber hinaus ist eine Porosität und Atmungsaktivität bei gesprühten Elastomertröpfchen nur möglich, wenn die Dicke dieser Elastomerbeschichtung sehr gering ist. Dies führt zu einer sehr geringen mechanischen Festigkeit des Materials. Ferner kann beim Beflocken einer 3D-Form z.B. bei konkaven Teilen keine gleichmäßig dichte Beflockung erreicht werden.

US 9596897 B2 beschreibt einen Taillenbund für einen Bekleidungsartikel, umfassend: eine elastische Basisschicht, eine elastische Montageschicht und eine Beflockung, die an der Oberfläche der Montageschicht angebracht ist. Der beschriebene Taillenbund weist folgende Nachteile auf:
Es wird ein "elastisches Klebeband" (Montageschicht 40) verwendet, um das Kleidungsstück im Taillenbereich (Basisschicht 30) zu stützen, oder ein elastisches Gestrick, das mit der Basisschicht 30 mit Heißschmelzfolie genäht oder verklebt ist. Es wird vorgeschlagen, dass eine Klebeschicht 50 sowohl mit der Basisschicht 30 als auch mit der Montageschicht 40 durch Druck (40-60 psi) für 20 bis 30 Sekunden und Wärme (150-170°F / 66-77°C) verbunden wird. Bei so niedriger Klebetemperatur ist es unmöglich, das Kleidungsstück auch nur bei 60°C zu bügeln oder zu waschen. Es wird auch vorgeschlagen, dass der Bund 11 und die Grundschicht 30 durch Nähte am Kleidungskörper (18) befestigt werden, was die Möglichkeit ausschließt, die beflockte Oberfläche direkt am Körper des Kleidungsstücks zu befestigen.

US 20090271914 A1 beschreibt ein Kleidungsstück umfassend Stützbänder, die aus einem elastomeren Klebstoff hergestellt sind und mit einem Ende der Flockfasern beflockt sind, die in den elastomeren Klebstoff eingebettet sind. Darüber hinaus wird ein Verfahren zur Herstellung von Kleidungsstücken mit Flockfasern beschrieben, die unter Verwendung elektrostatischer oder mechanischer Vorrichtungen hergestellt werden. Der Hauptnachteil des Verfahrens besteht darin, dass der Bekleidungshersteller die notwendige Technologie/Ausrüstung und Expertise, beispielsweise auf den Gebieten Klebstoffsiebdruck, Kleberspritzen, Aufbringen des Flockmaterials, Luftreinigung/Filterung, thermische Klebstofftrocknung bzw. Aushärtung, erwerben muss, um nach dem Schneiden eine direkte Beflockung der Bekleidungsteile durchführen zu können.

Aufgabe der vorliegenden Erfindung ist es die vorgenannten Nachteile zumindest teilweise auszuräumen.

Diese Aufgabe wird gelöst durch ein thermisch fixierbares textiles Flächengebilde, insbesondere verwendbar als fixierbarer Einlage-, Futter- und/oder Oberststoff in der Textilindustrie, umfassend ein Trägermaterial auf Basis eines Schmelzblasfaser-Vliesstoffs, wobei das Trägermaterial auf einer Seite Flockfasern und auf der von den Flockfasern abgewandten Seite einen Schmelzklebstoff aufweist.

Vorteilhaft an dem erfindungsgemäßen textilen Flächengebilde ist, dass es auf einfache Weise in Form von Flockfasern aufweisender Bahnenware hergestellt werden kann. In einer bevorzugten Ausführungsform der Erfindung ist das textile Flächengebilde mithin als Bahnenware ausgebildet. Ein wesentlicher Vorteil gegenüber Bekleidung, die im bereits konfektionierten Zustand beflockt wurde, ist, dass es die Verwendung von beflockter Bahnenware dem Bekleidungshersteller ermöglicht, auf einem Bekleidungsstück nur durch Schneiden und Verschmelzen beflockte Faseroberflächen zu erzeugen, ohne aufwändige Beflockungstechnologien anwenden zu müssen.

Weiter vorteilhaft ist, dass die Atmungsaktivität auf einfache Weise durch die Verwendung verschiedener Dichtegrade des Schmelzblasfaser-Vliesstoffs erreicht werden kann. Im nachfolgenden Beflockungsprozess kann der Klebstoff dann auf die schmelzgeblasenen Fasern aufgetragen werden, wodurch die Bereiche zwischen ihnen frei bleiben und als atmende (luftdurchlässige) Poren dienen können.

Erfindungsgemäß weist das textile Flächengebilde ein Trägermaterial auf Basis eines Schmelzblasfaser-Vliesstoffs auf. Dabei bedeutet der Begriff "auf Basis" mindestens 90 Gew.%, bezogen auf das Gesamtgewicht des Trägermaterials. Unter dem Begriff Schmelzblasfasern werden erfindungsgemäß Fasern verstanden, die durch Extrudieren eines geschmolzenen thermoplastischen Materials durch eine Vielzahl von feinen, gewöhnlich kreisförmig ausgebildeten Düsenkapillaren als geschmolzene Fasern in ein Hochgeschwindigkeitsgas (beispielsweise Luft), hergestellt werden. Durch diese Vorgehensweise wird der Durchmesser der Fasern verringert. Danach werden die schmelzgeblasenen Fasern durch den Hochgeschwindigkeitsgasstrom getragen und auf einer Sammeloberfläche abgelegt, um einen Schmelzblasfaser-Vliesstoff aus zufällig verteilten Fasern zu bilden. Das Schmelzblasverfahren ist gut bekannt und in verschiedenen Patenten und Publikationen, beispielsweise NRL - Bericht 4364, " Herstellung von superfeinen organischen Fasern " von V. A. Wendt, E.L. Boone und C. D. Fluharty ; NRL -Bericht 5265, " eine verbesserte Vorrichtung für die Bildung von superfeinen Thermoplastic Fibers " von K. D. Lawrence, R. T. Lukas , und J.A. Junge ; und U.S. Patent No. 3,849,241 , erteilt am 19. November 1974 an Buntin , et al, beschrieben. Diese Druckschriften sind hiermit durch Bezugnahme als Referenz aufgenommen.

Weiter vorteilhaft an einem Schmelzblasfaservliesstoff ist, dass aufgrund der vielen feinen Fasern die Anbindung eines Klebemittels deutlich besser als bei herkömmlichen Vliesstoffen ist.

In einer bevorzugten Ausführungsform der Erfindung sind die Schmelzblasfasern aus Polymeren gebildet, ausgewählt aus der Gruppe bestehend aus: Polyester, Polyolefinen, Polyamiden, Polyacrylaten, Polyvinylacetaten sowie Polyurethanen, Copolymeren und/oder Gemischen hiervon. Besonders bevorzugt sind dabei Polyurethane, da diese eine besonders hohe Elastizität aufweisen. Ebenfalls bevorzugt sind thermoplastische Elastomere, insbesondere thermoplastische, elastomere Polyester, Polyolefine und/oder Polyurethane. Thermoplastische Elastomere (TPE, gelegentlich auch *Elastoplaste* genannt) sind Kunststoffe, die sich bei Raumtemperatur vergleichbar den klassischen Elastomeren verhalten, sich jedoch unter Wärmezufuhr plastisch verformen lassen und somit ein thermoplastisches Verhalten zeigen.

In einer weiteren bevorzugten Ausführungsform der Erfindung weisen die Schmelzblasfasern einen Fasertiter von 0,2 - 5 dtex, vorzugsweise von 0,5 - 3 dtex, insbesondere von 0,5 - 2 dtex auf.

Der Anteil der Schmelzblasfasern im textilen Flächengebilde beträgt vorzugsweise mindestens 10 Gew. %, noch bevorzugter von 20 Gew. % bis 60 Gew. %, insbesondere von 25 Gew.% bis 55 Gew.%, jeweils bezogen auf das Gesamtgewicht des textilen Flächengebildes.

Erfindungsgemäß weist das Trägermaterial auf einer Seite Flockfasern auf. Flockfasern sind Fasern von geringer Länge, die in Form loser Fasern auf ein Substrat, hier das Trägermaterial, aufgebracht werden. Abhängig von Faserstärke und -länge kann entsprechend der gewünschten Funktion, Optik oder Haptik, eine samtweiche bis hart-abrasive Oberfläche erstellt werden. Die Flockfasern können aus jedem natürlichen oder synthetischen Material gebildet werden. Synthetische Materialien umfassen vorzugsweise Nylon, Polyamid, Polyester, beispielsweise Terephthalatpolymere und natürliche Materialien, wie Baumwolle, Seide, Viskose und/oder Wolle.

Die Länge der Flockfasern kann je nach Bedarf variiert werden. Bevorzugt weisen die Flockfasern eine Länge im Bereich von 0,3 mm bis 1,5 mm, vorzugsweise von 0,4 mm bis 0,75 mm, insbesondere von 0,4 mm bis 0,6 mm auf.

Der Titer der Flockfasern kann ebenfalls je nach Bedarf variiert werden. Bevorzugt weisen die Flockfasern einen Titer im Bereich von 0,5 dtex bis 3 dtex, vorzugsweise von 0,9 dtex bis 1,7 dtex, insbesondere von 0,9 dtex dtex bis 1,3 dtex auf.

Ferner können die Flockfasern linear oder nichtlinear sein. So können die Flockfasern beispielsweise gerollt, gecrimpt und/oder gebogen sein. Vorzugsweise stehen die Flockfasern im Wesentlichen senkrecht zum Trägermaterial. Sie können aber alternativ auch zufällig ausgerichtet, abgewinkelt und/oder im Wesentlichen parallel angeordnet sein. Die für die Beflockung verwendeten Fasern können durch Schneiden von Filamenten auf eine gewünschte Länge hergestellt werden. Die durch das Schneiden erzeugten Faserenden können glatt oder nicht glatt, beispielsweise gezackt sein.

Vorzugsweise sind die Flockfasern mittels eines Klebemittels auf das Trägermaterial fixiert. Geeignete Klebemittel sind beispielsweise Klebemittel auf Basis von Acrylat, Polyurethan, Silicon und/oder Gummi. Dabei ist unter dem Begriff "auf Basis von" ein Anteil von mindestens 50 Gew.% zu verstehen. Erfindungsgemäß besonders bevorzugt sind Klebemittel auf Basis von Acrylat, Polyurethan und/oder Silicon. Zweckmäßigerweise ist das Klebemittel ein aushärtbares Klebemittel.

In einer bevorzugten Ausführungsform weist das Klebemittel einen Vernetzer auf. Bevorzugt ist das Klebemittel im textilen Flächengebilde durch den Vernetzer vernetzt. Ein bevorzugter Vernetzer ist ein "blockiertes Isocyanat". Der Begriff "blockiertes Isocyanat" beschreibt entsprechend seiner herkömmlichen Bedeutung den Umstand, dass das Isocyanat beim in Kontakt bringen mit dem Klebemittel als Additionsverbindung mit einem Blockierungsmittel, insbesondere Alkoholen (Urethane) und/oder Aminen (Harnstoffe), vorliegt. Diese Additionsverbindung kann bei höheren Temperaturen das Isocyanat wieder freisetzen, wodurch die Vernetzung des Klebemittels initiiert werden kann.

Durch die Verwendung des blockierten Isocyanats kann der Zeitpunkt der Vernetzung gezielt eingestellt werden. Hierdurch kann verhindert werden, dass eine Vernetzung bereits während des Beschichtungsvorgangs auftritt, was zu Unregelmäßigkeiten in der Beschichtung führen könnte. Durch die Verwendung eines blockierten Isocyanats kann ferner ein maßgeschneiderter Vernetzungsgrad eingestellt werden. Dies führt zu einer verbesserten Qualität des Klebemittels.

Erfindungsgemäß besonders bevorzugte Blockierungsmittel sind ausgewählt aus der Gruppe bestehend aus 3,5-Dimethylpyrazol (DMP), Acetessigsäure, Malonester, Butanonoxim, sekundären Aminen, Caprolactam, Phenolen, Alkoholen und Gemischen hiervon. Ganz besonders bevorzugt ist dabei DMP, da dieses zu einer hervorragenden Vernetzung der Polymere führt, nicht toxisch ist und schon bei geringen Temperaturen, um 120°C bis 130°C deblockiert.

Das Isocyanat kann an einer oder an mehreren Isocyanat-Gruppen blockiert vorliegen.

In einer Ausführungsform ist das Klebemittel lediglich mittels Isocyanat vernetzt. Denkbar ist jedoch auch, dass das Klebemittel alternativ oder zusätzlich zum Isocyanat mittels anderen Vernetzern, z. B. Aziridinen, Polyisocyanaten, Carbodiimiden, Sacchariden, Acrcylamiden, Epooxiden, Aminen, Oxazolinen, Harnstoff-Derivaten, Hydrazinen und/oder Carbonsäurenhydrazide vernetzt ist.

Bevorzugt sind thermisch vernetzte Klebemittel. Diese sind vorteilhaft gegenüber feuchtevernetzten Klebemitteln, da die Vernetzung gezielt gesteuert werden kann.

In einer besonders bevorzugten Ausführungsform weist das textile Flächengebilde einen Schmelzblasfaservliesstoff auf Basis von thermoplastischem TPU, Polyester, Polyamid, Polyacrylat, Polyvinylacetat, Polyolefinen, Baumwolle, Wolle, Viskose, Lyocell in Kombination mit Flockfasern auf Basis von Polyamid, Polyester, Polyacrylat, Polyvinylacetat, Polyolefinen, Baumwolle, Seide, Wolle und/oder Viskose, einem Schmelzkleber auf Basis von Polyamid, Polyester, Polyolefinen, Polyacrylaten, Polyvinylacetaten oder Polyurethanen und einem vernetzten Klebemittel auf Basis von Polyacrylat, Polyurethan, Polyvinylacetat, Gummi und/oder Silikon auf.

Dabei bedeutet "auf Basis von" jeweils einen Gewichtsanteil von mehr als 50 Gew.%.

Um eine gute Elastizität (Dehnung) des textiles Flächengebilde zu erhalten, ist es von Vorteil, wenn die elastische Rückstellung des Klebemittels nicht niedriger ist als die elastische Rückstellung des Trägermaterials.

In einer bevorzugten Ausführungsform weist das erfindungsgemäße textile Flächengebilde eine Elastizität, gemessen nach DIN EN ISO 13934-1 bei einer Kraft von 3N, in mindestens einer Richtung von mindestens 2%, beispielsweise von 2% bis 50 %, noch bevorzugter von 10 % bis 20% auf.

In einer bevorzugten Ausführungsform weist das erfindungsgemäße textile Flächengebilde eine bleibende Dehnung, gemessen nach DIN 53 835, in mindestens einer Richtung von mindestens 0,1 %, beispielsweise von 2 % bis 20 %, noch bevorzugter von 1 % bis 5 % auf.

Die Flockfasern können das Trägermaterial vollflächig oder lediglich teilweise bedecken. Liegt eine lediglich teilweise Bedeckung des Trägermaterials vor, können die Flockfasern ein regelmäßiges oder unregelmäßiges Muster ausbilden. Vorteilhaft an einer lediglich teilweisen Bedeckung des Trägermaterials ist, dass auf einfache Weise die Luftdurchlässigkeit bzw. Atmungsfähigkeit des textilen Flächengebildes eingestellt werden kann. Darüber hinaus ermöglicht sie auch eine gezielte Einstellung von Modul und Dehnungsverhalten.

In einer Ausführungsform der Erfindung weist das textile Flächengebilde eine Atmungsaktivität, gemessen nach DIN EN ISO 9237 bei 100 Pa von mehr als 20 l/m2s, beispielsweise von 20 l/m2s bis 2000 l/m2s auf. In anderen Ausführungsformen kann es erwünscht sein, wenn die Atmungsaktivität geringer ist, beispielsweise weniger als 20 l/m2s, noch bevorzugter weniger als 10 l/m2s, noch bevorzugter weniger als 5 l/m2s und insbesondere etwa 0 l/m2s.

Das Aufbringen der Flockfasern auf das Trägermaterial kann mit verschiedenen Methoden, beispielsweise durch elektrostatische und/oder mechanische Beflockung erfolgen.

Erfindungsgemäß bevorzugt ist die elektrostatischen Beflockung. Diese ist gut bekannt und verwendet lose Flockfasern, die in einem elektrischen Feld auf das mit einem Klebemittel beschichtete Trägermaterial aufgebracht werden.

Erfindungsgemäß weist das Trägermaterial auf der von den Flockfasern abgewandten Seite einen Schmelzklebstoff auf. Schmelzklebstoffe, auch Heißklebestoffe, Heißkleber oder im Englischen Hotmelts genannt, sind seit langem bekannt. Allgemein versteht man unter ihnen im Wesentlichen lösungsmittelfreie Produkte, die im geschmolzenen Zustand auf eine Klebefläche aufgetragen werden, rasch beim Abkühlen erstarren und damit schnell Festigkeit aufbauen. Erfindungsgemäß bevorzugt werden thermoplastische Polymere, wie Polyamide (PA), Copolyamide, Polyester (PES), Copolyester, Ethylvinylacetat (EVA) und dessen Copolymere (EVAC), Polyolefine, insbesondere Polyethylen (PE), Polypropylen (PP), amorphe Polyalphaolefine (APAO), Polyurethane (PU) sowie Gemische hiervon als Schmelzklebstoffe verwendet. Erfindungsgemäß besonders bevorzugt sind Co-Polyamide, Co-Polyester und Polyurethane.

Die Klebewirkung der Schmelzklebstoffe basiert grundsätzlich darauf, dass sie sich als thermoplastische Polymere reversibel aufschmelzen lassen und als flüssige Schmelze aufgrund ihrer durch den Schmelzvorgang erniedrigten Viskosität in der Lage sind, die zu klebende Fläche zu benetzen und dadurch eine Adhäsion zu ihr auszubilden. Als Folge der anschließenden Abkühlung erstarrt der Schmelzklebstoff wieder zum Festkörper, der eine hohe Kohäsion besitzt und auf diese Weise die Verbindung zur Klebefläche herstellt. Nachdem die Klebung stattgefunden hat, sorgen die viskoelastischen Polymere dafür, dass die Adhäsion auch nach dem Abkühlvorgang mit ihren Volumenänderungen und dem damit verbundenen Aufbau mechanischer Spannungen erhalten bleibt. Die aufgebaute Kohäsion vermittelt die Bindekräfte zwischen den Substraten.

In einer Ausführungsform werden die Schmelzklebstoffe in Pulverform eingesetzt. Die Größe der Partikel orientiert sich an der zu bedruckenden Fläche, beispielsweise der gewünschten Größe eines Bindungspunktes. Im Falle eines Punktmusters kann der Partikeldurchmesser zwischen >0 µm und 500 µm variieren. Grundsätzlich ist die Partikelgröße des Schmelzklebstoffs nicht einheitlich, sondern folgt einer Verteilung, d.h. man hat immer ein Partikelgrößenspektrum vorliegen. Zweckmäßigerweise ist die Partikelgröße abgestimmt auf die gewünschte Auftragsmenge, Punktgröße und Punktverteilung.

Schmelzklebstoffe in Pulverform können mittels Streuauftrag aufgebracht werden, was insbesondere zum Kleben poröser Substrate für die Herstellung insgesamt atmungsaktiver Textilverbunde zweckmäßig ist. Vorteilhaft am Streuauftrag ist ferner, dass es eine einfache Auftragsmethode für Anwendungen in großem Maßstab ist. Da thermoaktivierte Pulver, beispielsweise aus Polyamiden, Polyestern oder Polyurethanen, bereits bei niedrigen Temperaturen klebfähig sind, eignen sie sich zur schonenden Laminierung wärmeempfindlicher Substrate, z.B. hochwertiger Textilien. Dank guter Fließeigenschaften im aktivierten Zustand wird selbst bei niedrigem Druck und kurzer Anpresszeit eine gute Verbindung hergestellt; dennoch bleibt das Risiko des Durchschlagens in das Gewebe gering.

Der Schmelzklebstoff kann auch mittels Pastendruck-, Doppelpunkt-, und Hotmeltverfahren auf den Schmelzblasfaser-Vliesstoff aufgebracht werden. Erfindungsgemäß besonders bevorzugt ist das Pastendruckverfahren, da hierdurch Griff und Elastizität besonders gut erhalten bleiben.

Aufgrund der Verwendung eines Schmelzblasfaser-Vliesstoffs als Basismaterial kann das Flächengewicht des erfindungsgemäßen textilen Flächengebildes sehr gering eingestellt werden. Als für viele Anwendungen zweckmäßig haben sich Flächengewichte, gemessen nach DIN EN 29073, im Bereich von 10 g/m² bis 400 g/m², vorzugsweise von 25 g/m² bis 200 g/m², und insbesondere von 30 g/m² bis 100 g/m² erwiesen.

Weiter vorzugsweise weist das textile Flächengebilde eine Dicke nach DIN EN ISO 9073-2 von 0,5 mm bis 1,6 mm, vorzugsweise von 0,5 mm bis 0,9 mm, auf.

Weiter vorzugsweise weist das textile Flächengebilde ein Modul, gemessen nach DIN 53 835 bei einer Dehnung von 25 % von weniger als 20 N, beispielsweise von 1 N bis 20 N, vorzugsweise von 2 N bis 10N auf. Das vergleichsweise geringe Modul des textilen Flächengebildes ist vorteilhaft, da sich das Flächengebilde ohne große Krafteinwirkung dehnen lässt und sich somit perfekt den Körperkonturen anpasst.

Aufgrund seiner spezifischen Eigenschaften eignet sich das erfindungsgemäße textile Flächengebilde hervorragend als fixierbarer Einlage-, Futter- und/oder Oberststoff in der Textilindustrie. Bevorzugte Einlagestoffe für die Kombination mit dem erfindungsgemäßen Schmelzblasfaser-Vliesstoff sind ausgewählt aus gestrickten oder gewebten elastischen Geweben, aus natürlichen oder synthetischen Garnen oder Kombination hiervon. Diese Stoffe können auch hochelastische Garne aufweisen. Bevorzugte Futterstoffe für die Kombination mit dem erfindungsgemäßen Schmelzblasfaser-Vliesstoff sind ausgewählt aus elastischem Echtleder tierischer Herkunft oder Kunstleder. Bevorzugte Oberstoffe für die Kombination mit dem erfindungsgemäßen Schmelzblasfaser-Vliesstoff sind ausgewählt aus laminiertem Gewebe oder losen Membranen.

Die Erfindung betrifft auch ein Verfahren zur Herstellung eines erfindungsgemäßen thermisch fixierbaren textilen Flächengebildes umfassend folgende Schritte:
A) Bereitstellen eines Trägermaterials auf Basis eines Schmelzblasfaser-Vliesstoffs;
B) Aufbringen von Flockfasern auf eine Seite des Trägermaterials;
C) Aufbringen eines Schmelzklebstoffs auf die von den Flockfasern abgewandte Seite des Trägermaterials.

Ein Vorteil des erfindungsgemäßen Verfahrens ist, dass der Schmelzblasfaser-Vliesstoff im ungeformten, d. h. flachen Zustand beflockt werden kann. Hierdurch kann die maximale Flockfaserdichte erreicht werden.

Das Bereitstellen des Trägermaterials in Schritt A) kann durch Schmelzblasen eines Vliesstoffrohmaterials, vorzugsweise Polyurethan, erfolgen. In einer bevorzugten Ausführungsform wird das Trägermaterial auf einem Hilfsträger, beispielsweise einem Spunbond-Vliesstoff, gebildet, wodurch ihm eine höhere Stabilität und einfachere Weiterverarbeitbarkeit verliehen wird. Vorzugsweise umfasst das Bereitstellen des Trägermaterials mithin dessen Fixierung auf einem Hilfsträger.

In einer Ausführungsform der Erfindung erfolgt anschließend in Schritt B) das Aufbringen von Flockfasern auf eine Seite des Trägermaterials. Vorzugsweise umfasst das Aufbringen der Flockfasern den vorgelagerten Schritt des Aufbringens eines Klebemittels.

Erfindungsgemäß bevorzugt ist die elektrostatischen Beflockung. Dabei werden die Flockfasern in einem elektrischen Feld auf das mit dem Klebemittel beschichtete Trägermaterial aufgebracht. Wird ein Hilfsträger verwendet, so werden Klebemittel und Flockfasern auf die vom Hilfsträger abgewandte Seite des Trägermaterials aufgebracht. Das Aufbringen des Klebemittels kann durch Siebdruck, Spritzpistole oder Tauchbad erfolgen. Die Oberfläche des Trägermaterials ist vorzugsweise glatt oder nur sehr leicht geprägt oder gerillt. Die Feldlinien sorgen dafür, dass sich die Flockfasern in einem gewünschten Winkel, vorzugsweise senkrecht, ausrichten und so eine gleichmäßige, textile Oberfläche erzeugen. Anschließend kann das Klebemittel ausgehärtet und die Beflockung verankert werden. Überschüssige und ungebundene Flockfasern können durch Vakuum entfernt werden.

Ebenfalls denkbar ist eine mechanische Beflockung zur Befestigung der Flockfasern. Hierzu kann das mit dem Klebemittel versehene Trägermaterial über eine Reihe von, vorzugsweise polygonalen, Rollen geführt werden, die diese schnell in Schwingungen versetzen. Diese Vibration kann die Flockfasern in das Klebemittel treiben.

Nach der Beflockung kann, falls verwendet, der Hilfsträger entfernt und danach ein Schmelzklebstoff auf die von den Flockfasern abgewandte Seite des Trägermaterials aufgebracht werden (Verfahrensschritt C). Der Schmelzklebstoff kann mittels Pastendruck-, Doppelpunkt-, Streu- und Hotmeltverfahren auf den Schmelzblasfaser-Vliesstoff aufgebracht werden. Erfindungsgemäß besonders bevorzugt ist das Pastendruckverfahren.

In einer alternativen Ausführungsform der Erfindung wird Verfahrensschritt C) vor Verfahrensschritt B) durchgeführt.

Die Erfindung betrifft mithin auch ein Verfahren zur Herstellung eines erfindungsgemäßen thermisch fixierbaren textilen Flächengebildes umfassend folgende Schritte:
A') Bereitstellen eines Trägermaterials auf Basis eines Schmelzblasfaser-Vliesstoffs;
B') Aufbringen eines Schmelzklebstoffs auf eine Seite des Trägermaterials;
C') Aufbringen von Flockfasern auf die vom Schmelzklebstoff abgewandte Seite des Trägermaterials.

In einer bevorzugten Ausführungsform wird das Trägermaterial auf einem Hilfsträger, beispielsweise einem Spunbond-Vliesstoff, gebildet. Wird ein Hilfsträger verwendet, so wird der Schmelzklebstoff auf die vom Hilfsträger abgewandte Seite des Trägermaterials aufgebracht und letzteres vor dem Aufbringen der Flockfasern wieder entfernt.

Auch bei dieser Verfahrensvariante umfasst das Aufbringen der Flockfasern vorzugsweise den vorgelagerten Schritt des Aufbringens eines Klebemittels.

### Beispiel

Es wurden verschiedene erfindungsgemäße textile Flächengebilde hergestellt. Hierzu wurde ein Trägermaterial auf Basis eines Schmelzblasfaser-Vliesstoffs, enthaltend ein thermoplastisches Polyurethan mit einem Gewicht von 75 g/m² bereitgestellt. Das Trägermaterial wurde mittels der Meltblown-Technologie hergestellt und Flockfasern (PA 6.6, Länge 0,4 mm, Titer 0,9 dtex) auf eine Seite des Trägermaterials aufgebracht. Die Flockfasern wurden dabei mittels verschiedener Klebemittel auf dem Trägermaterial fixiert. Als Klebemittel wurden die in der nachfolgenden Tabelle genannten Klebemittel verwendet. Anschließend wurde ein Schmelzklebstoff auf Basis von Co-Polyamid in Form einer wässrigen Dispersion mittels des Rotationssiebdruckverfahrens auf die von den Flockfasern abgewandte Seite des Trägermaterials aufgebracht.

In der nachfolgenden Tabelle sind die Eigenschaften der erhaltenen textilen Flächengebilde dargestellt:

**Tabelle 1**

| Beispiel | Klebemittel | Elastizität | bleibende Dehnung | Waschbeständigkeit | Ergebnis |
|---|---|---|---|---|---|
| 1 | Typ 1 | * | * | * | gut |
| 2 | Typ 2 | ** | ** | * | gut |
| 3 | Typ 3.1 | ** | *** | ** | sehr gut |
| 4 | Typ 3.2 | *** | ** | *** | sehr gut |

### Erläuterungen zu Tabelle 1

### 1. Klebemittel

Typ 1: Acrylat-System auf Wasserbasis ohne Vernetzer
Typ 2: Acrylat-System auf Wasserbasis mit blockiertem Isocyanat-Vernetzer (erfordert eine Deblockierungstemperatur von >140°C)
Typ 3.1: Wasserbasiertes System auf Acrylatbasis mit HDI (Hexamethylendiisocyanat)-Trimer-Isocyanat-Vernetzer (erfordert <120 C ° Deblockierungstemperatur)
Typ 3.2: wasserbasiertes PU-System mit Vernetzer (erfordert <120 C° Deblockierungstemperatur)

### 2. Elastizität

Elastizität wird gemessen nach DIN EN ISO13934-1:2013. Die Bewertung erfolgt wie folgt:

| | |
|---|---|
| * | 25% Dehnung bei einer Zugkraft von 15 N bis 20 N |
| ** | 25% Dehnung bei einer Zugkraft von 10 N bis 15 N |
| *** | 25% Dehnung bei einer Zugkraft von unter 10 N |

### 3. Bleibende Dehnung

Die bleibende Dehnung wird gemessen nach DIN 53835. Die Bewertung erfolgt wie folgt:

| | |
|---|---|
| * | bleibende Dehnung <3% |
| ** | bleibende Dehnung 3-4% |
| *** | bleibende Dehnung 5% |

### 4. Waschbeständigkeit

Waschbeständigkeit wird gemessen nach DIN EN ISO 6330:2012. Die Bewertung erfolgt wie folgt:

| | |
|---|---|
| * | Gewichtsverlust nach 10 Wäschen von 6-7 Gew.% |
| ** | Gewichtsverlust nach 10 Wäschen von 3-5 Gew.% |
| *** | Gewichtsverlust nach 10 Wäschen von weniger als 3 Gew.% |

### Kurzbeschreibung der Figuren

- Figur 1:: Textiles Flächengebilde 1 mit vollflächiger Flockfaserbeschichtung
- Figur 2:: Textiles Flächengebilde 1 mit einer als Muster ausgebildeten Flockfaserbeschichtung
- Figur 3:: Foto der Oberfläche eines textilen Flächengebildes 1 mit einer als Muster ausgebildeten Flockfaserbeschichtung

### Figurenbeschreibung

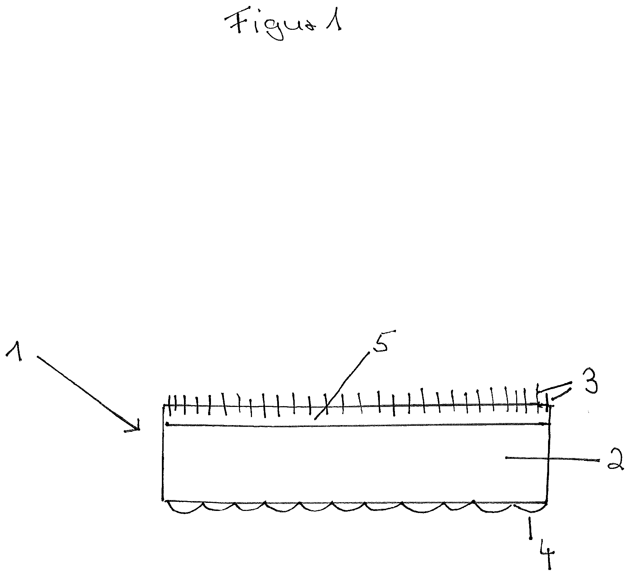

Figur 1 zeigt ein erfindungsgemäßes thermisch fixierbares textiles Flächengebilde 1 mit vollflächiger Flockfaserbeschichtung. Das textile Flächengebilde umfasst ein Trägermaterial 2 auf Basis eines Schmelzblasfaser-Vliesstoffs, wobei das Trägermaterial 2 auf einer Seite vollflächig aufgebrachte Flockfasern 3 und auf der von den Flockfasern 3 abgewandten Seite einen Schmelzklebstoff 4 aufweist. Die Flockfasern 3 sind dabei mittels eines Klebemittels 5 auf dem Trägermaterial 2 fixiert.

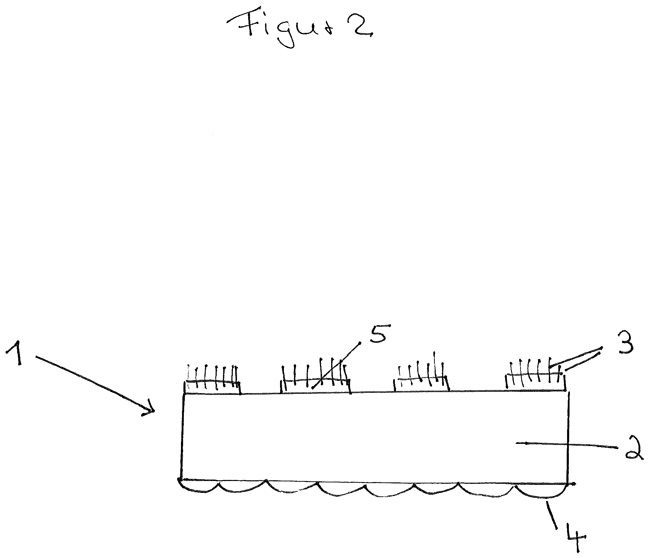

Figur 2 zeigt ein erfindungsgemäßes thermisch fixierbares textiles Flächengebilde 1 mit einer als Muster ausgebildeten Flockfaserbeschichtung. Das textile Flächengebilde umfasst ein Trägermaterial 2 auf Basis eines Schmelzblasfaser-Vliesstoffs, wobei das Trägermaterial 2 auf einer Seite in Form eines Musters aufgebrachte Flockfasern 3 und auf der von den Flockfasern 3 abgewandten Seite einen Schmelzklebstoff 4 aufweist. Die Flockfasern 3 sind dabei mittels eines Klebemittels 5 auf dem Trägermaterial 2 fixiert.

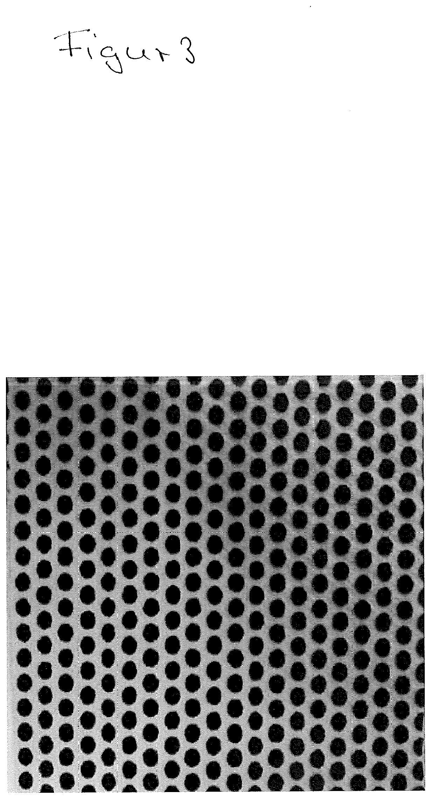

Figur 3 zeigt ein Foto der Oberfläche eines textilen Flächengebildes 1 mit einer als Muster ausgebildeten Flockfaserbeschichtung

## Patentansprüche

1. Thermisch fixierbares textiles Flächengebilde (1), insbesondere verwendbar als fixierbarer Einlage-, Futter- und/oder Oberststoff in der Textilindustrie, umfassend ein Trägermaterial (2) auf Basis eines Schmelzblasfaser-Vliesstoffs, wobei das Trägermaterial (2) auf einer Seite Flockfasern (3) und auf der von den Flockfasern (3) abgewandten Seite einen Schmelzklebstoff (4) (4) aufweist.

2. Textiles Flächengebilde (1) nach Anspruch 1, **dadurch gekennzeichnet dass** es als Bahnenware ausgebildet ist.

3. Textiles Flächengebilde (1) nach Anspruch 1 oder 2, **gekennzeichnet durch** eine Atmungsaktivität, gemessen nach DIN EN ISO 9237 bei 100 Pa von mehr als 20 l/m2s, beispielsweise von 20 l/m2s bis 2000 l/m2s und oder von weniger als 10 l/m2s.

4. Textiles Flächengebilde (1) nach einem oder mehreren der vorangehenden Ansprüche, **gekennzeichnet durch** eine Elastizität, gemessen nach DIN EN ISO 13934-1 bei einer Kraft von 3N, in mindestens einer Richtung von mindestens 2%.

5. Textiles Flächengebilde (1) nach einem oder mehreren der vorangehenden Ansprüche, **dadurch gekennzeichnet dass** der Schmelzklebstoff (4) ausgewählt ist aus der Gruppe bestehend aus thermoplastischen Polymere, insbesondere Polyamiden (PA), Copolyamiden, Polyestern (PES), Copolyestern, Ethylvinylacetat (EVA) und dessen Copolymeren (EVAC), Polyethylen (PE), Polypropylen (PP), amorphen Polyalphaolefinen (APAO), Polyurethane (PU) sowie Gemischen hiervon.

6. Textiles Flächengebilde (1) nach einem oder mehreren der vorangehenden Ansprüche, **dadurch gekennzeichnet dass** die Flockfasern (3) mittels eines Klebemittels (5) auf dem Trägermaterial (2) fixiert sind.

7. Textiles Flächengebilde (1) nach einem oder mehreren der vorangehenden Ansprüche, **dadurch gekennzeichnet dass** die Flockfasern (3) das Trägermaterial (2) lediglich teilweise bedecken und vorzugsweise ein regelmäßiges oder unregelmäßiges Muster ausbilden.

8. Textiles Flächengebilde (1) nach einem oder mehreren der vorangehenden Ansprüche, **gekennzeichnet durch** ein Flächengewicht, gemessen nach DIN EN 29073, im Bereich von 10 g/m² bis 400 g/m².

9. Textiles Flächengebilde (1) nach einem oder mehreren der vorangehenden Ansprüche, **gekennzeichnet durch** eine Dicke nach DIN EN ISO 9073-2 von 0,5 mm bis 1,6 mm.

10. Textiles Flächengebilde (1) nach einem oder mehreren der vorangehenden Ansprüche, **gekennzeichnet durch** ein Modul, gemessen nach DIN 53 835 bei einer Dehnung von 25 % von weniger als 20 N.

11. Verwendung eines textilen Flächengebilde (1) nach einem oder mehreren der vorangehenden Ansprüche als fixierbarer Einlage-, Futter- und/oder Oberststoff in der Textilindustrie.

12. Verfahren zur Herstellung eines textilen Flächengebilde (1) nach einem oder mehreren der Ansprüche 1 bis 8 umfassend folgende Schritte:
D) Bereitstellen eines Trägermaterials auf Basis eines Schmelzblasfaser-Vliesstoffs;
E) Aufbringen von Flockfasern (3) auf eine Seite des Trägermaterials;
F) Aufbringen eines Schmelzklebstoff (4)s auf die von den Flockfasern (3) abgewandte Seite des Trägermaterials.

13. Verfahren nach Anspruch 12, **dadurch gekennzeichnet dass** das Bereitstellen des Trägermaterials in Schritt A) dessen Fixierung auf einem Hilfsträger, beispielsweise einem Spunbond-Vliesstoff, umfasst und der Hilfsträger nach dem Aufbringen der Flockfasern (3) in Schritt B) wieder entfernt wird.

14. Verfahren nach Anspruch 12 oder 13, **dadurch gekennzeichnet dass** das Aufbringen der Flockfasern (3) in Schritt B) den vorgelagerten Schritt des Aufbringens eines Klebemittels umfasst.

15. Verfahren nach einem oder mehreren der Ansprüche 12 bis 14, **dadurch gekennzeichnet dass** Verfahrensschritt C) vor Verfahrensschritt B) durchgeführt wird.
